# EUROPÄISCHE PATENTANMELDUNG

(11) **EP 2 644 922 A1**
(43) Veröffentlichungstag der Anmeldung: **02.10.2013**
(21) Anmeldenummer: 13161212.9
(22) Anmeldetag: 27.03.2013
(51) Int. Cl.: F16C 41/04, B25B 27/06, F16C 43/04

(54) **Verfahren zum Zusammenbau eines Wälzlagers und Wälzlager-Montagewerkzeug**

(30) Priorität: 30.03.2012 DE 102012205177
(71) Anmelder: Aktiebolaget SKF, 41550 Göteborg (SE)
(72) Erfinder: Huber, Johann, 3352 St. Peter/Au (AT); Hußlein, Wolfgang, 97447 Gerolzhofen (DE); Reichert, Jürgen, 97499 Donnersdorf (DE); Schürrer, Patrick, 4400 Steyr (AT)
(74) Vertreter: Schonecke, Mitja

(57) **Zusammenfassung**

Die Erfindung betrifft ein Verfahren zum Zusammenbau eines Wälzlagers (1), bei dem eine vormontierte Einheit (2), umfassend einen Lageraußenring (3) mit mindestens einem Satz Wälzkörper (4), mit einem Lagerinnenring (5) zusammengeführt wird, indem der Lagerinnenring (5) und die vormontierte Einheit (2) relativ zueinander axial (a) zusammengeschoben werden. Um den Zusammenbau des Lagers insbesondere bei schwierigen Einbaubedingungen zu erleichtern, sieht das erfindungsgemäße Verfahren die Schritte vor: a) Vormontieren der Einheit (2), umfassend den Lageraußenring (3) und den mindestens einen Satz Wälzkörper (4); b) axiales Einschieben mindestens eines Spreizelements (6) zwischen zwei benachbarte Wälzkörper (4', 4"), so dass die beiden benachbarten Wälzkörper (4', 4") in Umfangsrichtung (U) voneinander weg gedrückt werden; c) axiales Zusammenführen von vormontierter Einheit (2) und Lagerinnenring (5); d) Herausziehen des mindestens einen Spreizelements (6). Des Weiteren betrifft die Erfindung ein Wälzlager-Montagewerkzeug.

## Beschreibung

Die Erfindung betrifft ein Verfahren zum Zusammenbau eines Wälzlagers, bei dem eine vormontierte Einheit, umfassend einen Lageraußenring mit mindestens einem Satz Wälzkörper, mit einem Lagerinnenring zusammengeführt wird, indem der Lagerinnenring und die vormontierte Einheit relativ zueinander axial zusammengeschoben werden. Des Weiteren betrifft die Erfindung ein Wälzlager-Montagewerkzeug.

Beim Zusammenbau von Wälzlagern wird häufig eine vormontierte Einheit verwendet, die aus Außenring und Wälzkörpersatz besteht. Diese Einheit wird dann durch axiales Aufschieben auf den Innenring zum fertigen Wälzlager zusammengefügt. Insbesondere vollrollige bzw. vollkugelige Lager, aber auch besondere Käfiglager mit geteilten Käfigen bzw. Käfigsegmenten für Wälz- und Linearlager sind dabei nicht selbsthaltend, d. h. beim Entfernen des Innenrings fallen die Wälzkörper heraus. Hierdurch entstehen Probleme bei der getrennten Innenring-Außenring-Montage. Dies kann dazu führen, dass ein Zusammenbau gar nicht möglich ist.

Bei selbsthaltenden Lagern, d. h. bei solchen, bei denen eine selbsthaltende stabile Einheit bestehend aus Außenring und Wälzkörpersatz gegeben ist, gibt es teilweise Probleme damit, dass sich größere Rollen- bzw. Kugeldurchhänge ergeben. Durch das Aufstellen der Wälzkörper besteht die Gefahr einer Laufbahnbeschädigung bei der Lagermontage. Im Extremfall kann auch hier ein Zusammenbau des Lagers gar nicht erfolgen.

Um dem zu begegnen, ist es bekannt, selbsthaltende Lager einzusetzen, z. B. vollrollige Zylinderrollenlager oder Käfiglager mit reduziertem Rollendurchhang. Dies stellt aber gegebenenfalls Einschränkungen in der Konstruktion des Lagers dar.

Weiterhin ist es bekannt, Montagehülsen beim Zusammenbau des Lagers einzusetzen. Dies ist für nicht selbsthaltende Lager bzw. Lager mit großem Rollendurchhang üblich. Eine Einheit, bestehend beispielsweise aus Lageraußenring und Zylinderrollensatz (im Falle eines sog. RNU-Lagers), wird hierbei mittels einer Innenringhülse zusammengehalten. Der Wälzlagerinnenring wird dann z. B. auf einer Welle montiert und die genannte Einheit samt Hülse in einem Gehäuse eingebaut. Bei der Montage der Welle schiebt der Innenring die Hülse aus der vormontierten Einheit axial heraus, d. h. der Innenring tritt an die Stelle der Hülse. Hiermit kann ein Auseinanderfallen der Teile des Lagers bei dessen Zusammenbau verhindert werden.

Problematisch ist hierbei, dass ein hinreichender Bauraum vorhanden sein muss, um die Hülse, die für den Zusammenhalt der vormontierten Einheit sorgt, axial herausschieben zu können. Es sind Anwendungen bekannt, wo dies nicht möglich ist, da die herausgeschobene Hülse nicht mehr entfernt werden kann (z. B. im Falle einer Gehäuseendseite oder im Falle eines Freiraums, der durch eine Verzahnung versperrt ist).

Es ist zwar auch bekannt, Hülsen sehr unterschiedlich zu gestalten, so dass beispielsweise kein Herausschieben der Hülse erfolgt, sondern ein Entfernen der Hülse zur Einschubseite hin (sog. Fingerhülsen). Aber auch hier ist oftmals das Entfernen der Hülse nach dem Zusammenbau des Lagers nicht mehr möglich bzw. es ist keine Hülse einsetzbar.

Der Erfindung liegt die **Aufgabe** zugrunde, ein Verfahren der eingangs genannten Art bereitzustellen, mit dem auch im Falle von nicht selbsthaltenden Lagern bzw. bei großem Durchhang der Wälzkörper ein problemloser Zusammenbau des Lagers möglich ist, wobei auf den Einsatz einer Montagehülse verzichtet werden kann. Damit soll insbesondere der Zusammenbau des Lagers auch in den Fällen in einfacher Weise möglich sein, wenn der Einsatz einer Hülse aus den oben genannten Gründen nicht möglich ist. Des Weiteren soll ein hierfür geeignetes Montagewerkzeug bereitgestellt werden.

Die **Lösung** dieser Aufgabe durch die Erfindung ist dadurch gekennzeichnet, dass das Verfahren die Schritte aufweist:
a) Vormontieren der Einheit, umfassend den Lageraußenring und den mindestens einen Satz Wälzkörper;
b) axiales Einschieben mindestens eines Spreizelements zwischen zwei benachbarte Wälzkörper, so dass die beiden benachbarten Wälzkörper in Umfangsrichtung voneinander weg gedrückt werden;
c) axiales Zusammenführen von vormontierter Einheit und Lagerinnenring;
d) Herausziehen des mindestens einen Spreizelements.

Dabei kann zwischen zwei Wälzkörpern ein Käfigelement angeordnet sein, wobei das mindestens eine Spreizelement zwischen einen Wälzkörper und das Käfigelement eingeschoben wird.

Das Wälzlager kann auch als vollrolliges Lager ausgebildet sein.

Das Käfigelement kann aus einer Anzahl von Käfigsegmenten bestehen, wobei jeweils ein Käfigsegment zwischen zwei Wälzkörpern angeordnet ist.

Bevorzugt ist das Wälzlager ein Zylinderrollenlager, wobei vorzugsweise der Lageraußenring zwei Borde für den axialen Anlauf der Zylinderrollen aufweist.

Das vorgeschlagene Wälzlager-Montagewerkzeug zeichnet sich dadurch aus, dass es ein Spreizelement aufweist, das eine streifenförmige Grundkontur hat, wobei am einen Ende des Spreizelements ein Handgriff angeordnet ist.

Die beiden sich gegenüberliegenden breiten Seiten des Spreizelements können konisch zueinander verlaufen, wobei der Handgriff am dickeren Ende des Spreizelements angeordnet ist.

Das Spreizelement kann in einem am Handgriff angrenzenden Endbereich einen verbreiteten Abschnitt aufweisen.

Bevorzugt ist das Spreizelement mit dem Handgriff über ein Gelenk verbunden.

Eine verbesserte Handhabung des Wälzlager-Montagewerkzeug wird möglich, wenn das Spreizelement in Richtung seiner Längsachse gewellt ausgebildet ist. Alternativ kann das Spreizelement auch bogenförmig ausgebildet sein, wobei der Bogen sich um die Richtung der Längsachse des Spreizelements spannt. Ferner kann vorgesehen sein, dass das Spreizelement auf seiner Oberfläche mit noppenförmigen Erhebungen versehen ist, die aus elastischem Material bestehen.

Die Erfindung schlägt also einen Verspannstift zur Selbsthaltung von Wälzkörpersätzen bzw. zur Reduzierung des Rollendurchhangs für das Wälzlagerhandling und die Wälzlagermontage vor.

Durch ein Verspreizen der Wälzkörper mit Hilfe eines oder mehrerer Spreizelemente, d. h. Keile, werden das Selbsthalten sowie ein nur minimaler Rollendurchhang des Wälzkörpersatzes im Lageraußenring erreicht. Dies ist beispielsweise anwendbar für vollrollige Zylinderrollenlager bzw. Zylinderrollenlager mit Käfigsegmenten.

Durch das Verspreizen der Wälzkörper mittels des Spreizelements (Verspannstift) ergibt sich also eine Reduzierung des Rollendurchhangs bzw. eine selbsthaltende Einheit bestehend aus Lageraußenring und Rollensatz.

In vorteilhafter Weise wird auch erreicht, dass ein Toleranzausgleich der zu verspannenden Komponenten erfolgt.

Auch bei sehr engen Platzverhältnissen ist ein einfaches Entfernen des Spreizelements möglich, zumal, wenn das Montagewerkzeug wie oben beschrieben ausgebildet ist.

In der Zeichnung sind Ausführungsbeispiele der Erfindung dargestellt. Es zeigen:
- Fig. 1: einen teilweisen Radialschnitt eines Zylinderrollenlagers, wobei der Prozess des Zusammenbaus des Lagers unter Einsatz eines Montagewerkzeugs mit einem Spreizelement dargestellt ist,
- Fig. 2: einen Ausschnitt des Zylinderrollenlagers während des Zusammenbaus, gesehen in Achsrichtung, wobei der Außenring und der Zylinderrollensatz mit dem angesetzten Montagewerkzeug dargestellt ist und wobei der Schnitt A-B gemäß Fig. 1 zu sehen ist,
- Fig. 3a: das Montagewerkzeug in der Seitenansicht,
- Fig. 3b: das Montagewerkzeug in der Draufsicht,
- Fig. 4: eine erste alternative Ausgestaltung des Spreizelements des Montagewerkzeugs in der Draufsicht,
- Fig. 5: eine zweite alternative Ausgestaltung des Spreizelements des Montagewerkzeugs in der Draufsicht,
- Fig. 6: eine dritte alternative Ausgestaltung des Spreizelements des Montagewerkzeugs, gesehen in Richtung der Längsachse des Spreizelements, und
- Fig. 7: eine vierte alternative Ausgestaltung des Spreizelements des Montagewerkzeugs in der Draufsicht.

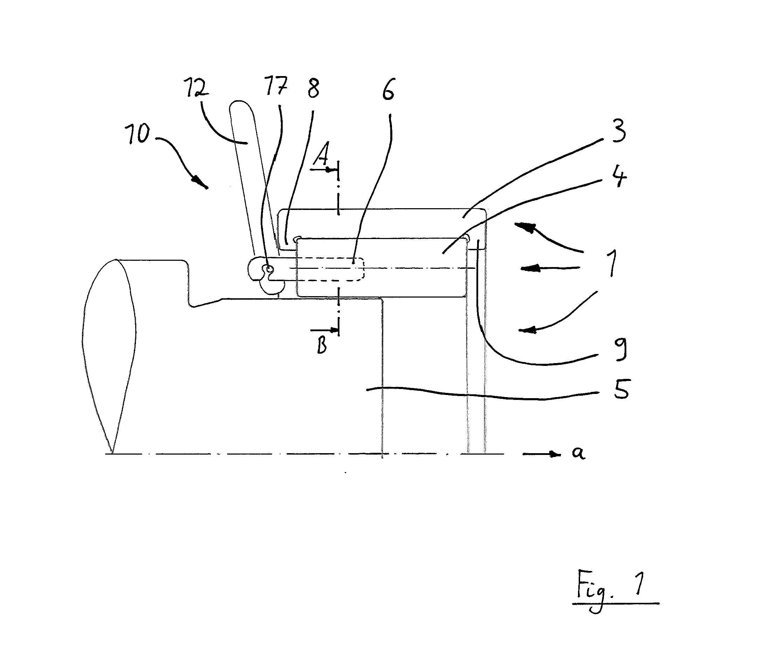

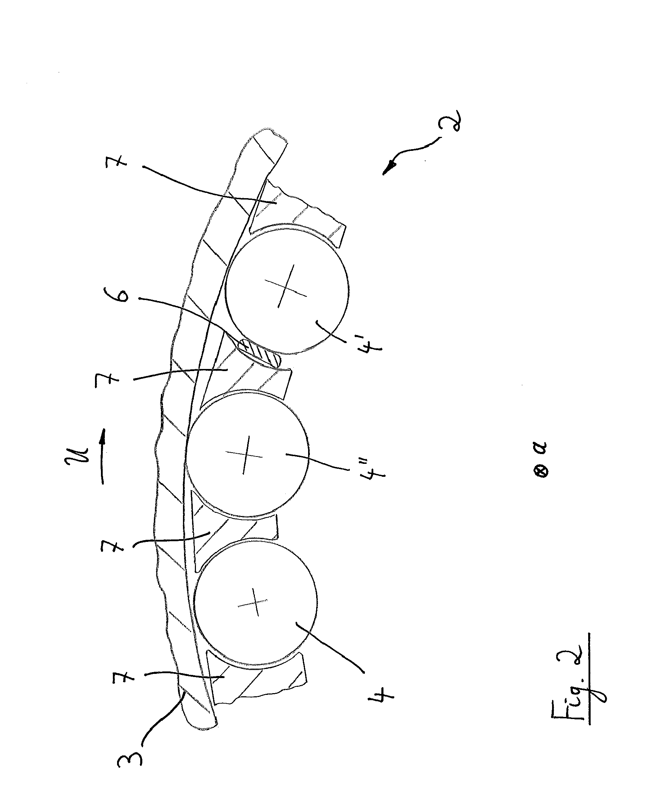

In Fig. 1 ist ein Wälzlager 1 in Form eines Zylinderrollenlagers skizziert, und zwar während seines Zusammenbaus. Fig. 2 zeigt den Außenring 3 und den Wälzkörpersatz 4 während des Zusammenbaus.

In Fig. 2 zu erkennen ist der Lageraußenring 3 und der Satz Wälzkörper 4, die eine vormontierte Einheit 2 bilden, die beim Zusammenbau des Wälzlagers 1 - s. Fig. 1 - in axiale Richtung a auf den Innenring 5 aufgeschoben werden. Bestandteil der vormontierten Einheit 2 ist auch ein Käfigelement 7, das vorliegend aus einer Anzahl Käfigsegmenten besteht, wobei je ein Segment zwischen zwei benachbarten Wälzkörpern 4 angeordnet ist. Für den Fall, dass in Fig. 1 rechts kein hinreichender Raum zum Entfernen einer Montagehülse ist, kann eine solche vorliegend nicht verwendet werden. Vielmehr wird wie folgt vorgegangen:

Bevor die vormontierte Einheit 2, d. h. der Lageraußenring 3 samt Wälzkörpersatz 4, auf den Lagerinnenring 5 aufgeschoben wird, wird ein Wälzlager-Montagewerkzeug 10 mit einem Spreizelement 6 eingesetzt. Das Spreizelement 6 wird - wie es in der Zusammenschau der Figuren 1 und 2 zu erkennen ist - zwischen einen Wälzkörper 4' und ein Käfigsegment 7 axial eingeschoben.

Das axiales Einschieben des Spreizelements 6 zwischen zwei benachbarte Wälzkörper 4', 4" hat zur Folge, dass die beiden benachbarten Wälzkörper 4', 4" in Umfangsrichtung U voneinander weg gedrückt werden. Hierdurch werden sämtliche Wälzkörper 4 des Rollensatzes radial nach außen gegen den Lageraußenring 3 bzw. gegen die Laufbahn des Lageraußenrings gedrückt, so dass eine selbsthaltende Einheit entsteht, die sich zudem dadurch auszeichnet, dass es keinen Rollendurchhang gibt. Der Selbsthalteeffekt der Einheit 2 wird durch die Borde 8 und 9 des Lageraußenrings 3 begünstigt, die die Wälzkörper 4 relativ zum Lageraußenring 3 axial festlegen.

Somit ist es nunmehr in einfacher Weise möglich, die Einheit 2 ohne Montagehülse auf den Lagerinnenring 5 aufzuschieben, wie es Fig. 1 illustriert.

Nachdem die vormontierte Einheit 2 hinreichend weit axial auf den Innenring 5 aufgeschoben ist, kann das Montagewerkzeug 10 mit dem Spreizelement 6 aus der in den Figuren 1 und 2 gezeigten Position herausgezogen und der Montagevorgang zum Abschluss gebracht werden.

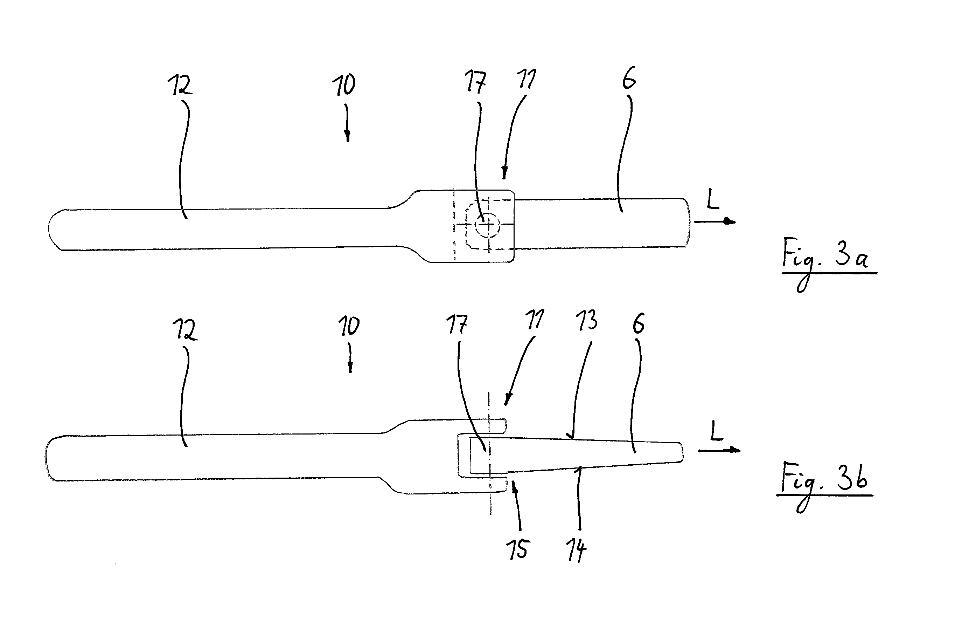

Das Montagewerkzeug 10 ist in den Figuren 3a und 3b dargestellt. Es besteht im wesentlichen aus dem Spreizelement 6 und einem Handgriff 12, wobei beide Teile über ein Gelenk 17 miteinander verbunden sind, d. h. das Spreizelement 6 ist an seinem Ende 11 mit dem Handgriff 12 verbunden. Die gelenkige Anordnung des Spreizelements 6 am Handgriff 12 erlaubt im gegebenen Falle ein Heraushebeln des Spreizelements 6 nach Abschluss der Montage, wie es in Fig. 1 dargestellt ist.

Das Spreizelement 6 hat eine stabförmige bzw. streifenförmige Grundkontur, die konisch ausgebildet ist. Die Längsachse des Spreizelements 6 ist mit L angegeben. Zu erkennen ist, dass die beiden Seiten 13 und 14 des Spreizelements 6 konisch zueinander verlaufen. Am dicken Ende 15 des Spreizelements ist die Anordnung über das Gelenk 17 am Handgriff 12 vorgesehen.

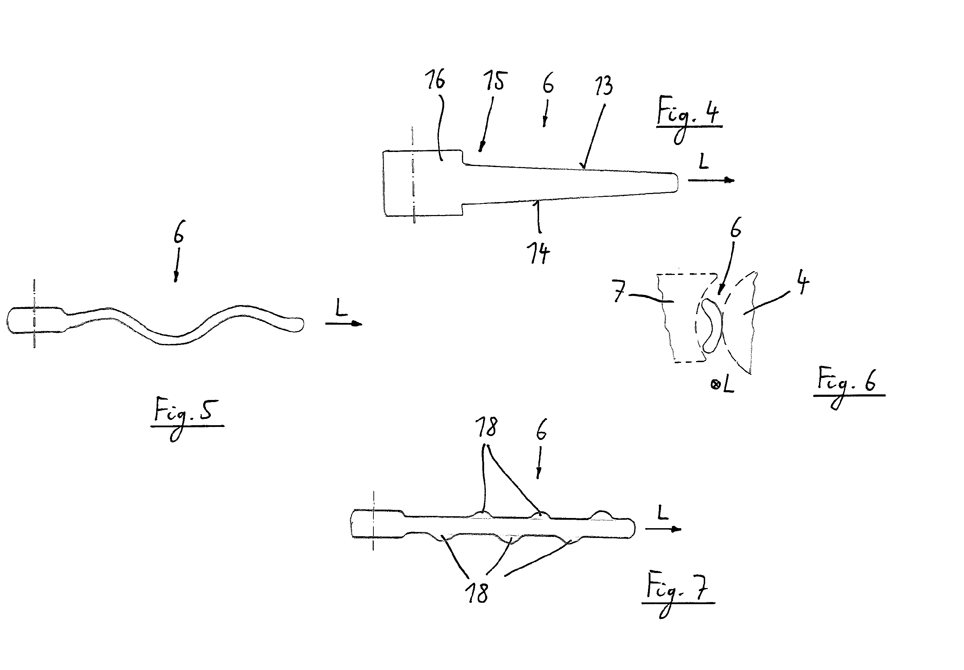

In den Figuren 4 bis 7 sind verschiedene alternative Ausgestaltungen des Spreizelements 6 skizziert.

Gemäß Fig. 4 ist ein verbreiterter Abschnitt 16 am dicken Ende 15 des Spreizelements 6 vorgesehen. Dies hat den Vorteil, dass eine maximale Einschubtiefe des Spreizelements 6 zwischen die Wälzkörper 4 bzw. zwischen den Wälzkörper 4' und das Käfigelement 7 definiert ist.

Die wellenförmige Ausgestaltung des Spreizelements 6 gemäß Fig. 5 erlaubt einen hinreichenden Federweg in Umfangsrichtung U, wenn das Spreizelement eingeschoben wird.

Gemäß Fig. 6 ist das Spreizelement 6 - gesehen in Längsrichtung L - bogenförmig ausgebildet, so dass gleichermaßen der Federweg hinreichend groß ist.

Bei der Ausführungsform nach Fig. 7 ist das sich im wesentlichen linear erstreckende Spreizelement 6 mit noppenartigen Erhebungen auf den Seitenflächen versehen, die aus elastischem Material bestehen können, so dass auch wieder ein hinreichender Federeffekt erzeugt wird, wenn das Spreizelement 6 in die Einheit 2 eingeschoben wird.

Eine vorteilhafte Ausgestaltung der Erfindung sieht ein Set an Spreizelementen 6 vor, die (über eine als Gelenk 17 fungierende Schraubenverbindung) mit dem Handstück 12 kombiniert werden können.

Dabei kann das Set Spreizelemente 6 mit einer Breiten- bzw. Dickenstaffelung von z. B. 0,5 mm beinhalten, so dass das jeweils optimal passende Spreizelement für die konkrete Anwendung verwendet werden kann.

Gleichermaßen kann das Set auch verschiedene Spreizelemente 6 unterschiedlicher Länge in Längsrichtung L vorsehen, so dass das Montagewerkzeug 10 auf die jeweiligen Platzverhältnisse angepasst werden kann.

Hinsichtlich der Länge des zum Einsatz kommenden Spreizelements 6 sei folgendes angemerkt:

Während sich in Fig. 1 das Spreizelement 6 im eingeschobenen Zustand (wie in der Figur skizziert) nur gut über ca. ein Drittel der axialen Länge der Wälzkörper 4 erstreckt, kann natürlich auch eine sehr viel größere Länge des Spreizelements 6 vorgesehen werden. Es kann bei Bedarf auch so lange ausgeführt sein, dass es sich über die gesamte Länge der Wälzkörper 4 im bestimmungsgemäß eingeschobenen Zustand erstreckt.

Ein einfaches Einschieben des Spreizelements 6 kann durch Verwendung von flexiblem Kunststoff begünstig werden.

Auch die Ausgestaltung des Montagewerkzeugs 10 hinsichtlich des Entfernens aus dem montierten Lager kann vielfältig sein und ist keinesfalls auf die in den Ausführungsbeispielen dargestellten Lösungen beschränkt.

Beispielsweise kann am Spreizelement 6 direkt eine Lasche oder ein Griff angebracht sein, um es an dieser bzw. an diesem nach der Montage des Lagers wieder aus dem Lager zu ziehen. Ein weiteres Hilfswerkzeug zur Entfernung des Spreizelements 6 ist dann also nicht nötig.

Ein weiterer vorteilhafter Einsatz des beschriebenen Montagewerkzeugs 10 besteht darin, es als Transportsicherung zu nutzen.

Das eingeschobene Spreizelement 6 verspannt - wie beschrieben - die Wälzkörper mit dem Außenring, was beim Transport den Vorteil bietet, Transportschäden durch lose Teile mit entsprechendem Schwingungspotential ruhig zu stellen. Dies ist vor allem bei empfindlichen Lagern relevant und kann nicht nur dort zum schonenden Transport genutzt werden.

### Bezugszeichenliste

| | |
|---|---|
| 1 | Wälzlager |
| 2 | vormontierte Einheit |
| 3 | Lageraußenring |
| 4 | Wälzkörper |
| 4', 4" | Wälzkörper |
| 5 | Lagerinnenring |
| 6 | Spreizelement |
| 7 | Käfigelement |
| 8 | Bord |
| 9 | Bord |
| 10 | Wälzlager-Montagewerkzeug |
| 11 | Ende des Spreizelement |
| 12 | Handgriff |
| 13 | Seite des Spreizelements |
| 14 | Seite des Spreizelements |
| 15 | dickes Ende des Spreizelements |
| 16 | verbreiteter Abschnitt |
| 17 | Gelenk |
| 18 | Erhebung |
| | |
| a | axiale Richtung |
| U | Umfangsrichtung |
| L | Längsachse |

## Patentansprüche

1. Verfahren zum Zusammenbau eines Wälzlagers (1), bei dem eine vormontierte Einheit (2), umfassend einen Lageraußenring (3) mit mindestens einem Satz Wälzkörper (4), mit einem Lagerinnenring (5) zusammengeführt wird, indem der Lagerinnenring (5) und die vormontierte Einheit (2) relativ zueinander axial (a) zusammengeschoben werden,
**dadurch gekennzeichnet,**
**dass** das Verfahren die Schritte aufweist:
a) Vormontieren der Einheit (2), umfassend den Lageraußenring (3) und den mindestens einen Satz Wälzkörper (4);
b) axiales Einschieben mindestens eines Spreizelements (6) zwischen zwei benachbarte Wälzkörper (4', 4"), so dass die beiden benachbarten Wälzkörper (4', 4") in Umfangsrichtung (U) voneinander weg gedrückt werden;
c) axiales Zusammenführen von vormontierter Einheit (2) und Lagerinnenring (5);
d) Herausziehen des mindestens einen Spreizelements (6).

2. Verfahren nach Anspruch 1, **dadurch gekennzeichnet, dass** zwischen zwei Wälzkörpern (4) ein Käfigelement (7) angeordnet ist, wobei das mindestens eine Spreizelement (6) zwischen einen Wälzkörper (4') und das Käfigelement (7) eingeschoben wird.

3. Verfahren nach Anspruch 1, **dadurch gekennzeichnet, dass** das Wälzlager (1) als vollrolliges Lager ausgebildet ist.

4. Verfahren nach Anspruch 2, **dadurch gekennzeichnet, dass** das Käfigelement (7) aus einer Anzahl von Käfigsegmenten besteht, wobei jeweils ein Käfigsegment zwischen zwei Wälzkörpern (4) angeordnet ist.

5. Verfahren nach einem der Ansprüche 1 bis 4, **dadurch gekennzeichnet, dass** das Wälzlager ein Zylinderrollenlager ist, wobei vorzugsweise der Lageraußenring (3) zwei Borde (8, 9) für den axialen Anlauf der Zylinderrollen (4) aufweist.

6. Wälzlager-Montagewerkzeug (10), insbesondere für die Durchführung des Verfahrens nach einem der Ansprüche 1 bis 5,
**dadurch gekennzeichnet,**
**dass** es ein Spreizelement (6) aufweist, das eine streifenförmige Grundkontur hat, wobei am einen Ende (11) des Spreizelements (6) ein Handgriff (12) angeordnet ist.

7. Wälzlager-Montagewerkzeug nach Anspruch 6, **dadurch gekennzeichnet, dass** die beiden sich gegenüberliegenden breiten Seiten (13, 14) des Spreizelements (6) konisch zueinander verlaufen, wobei der Handgriff (12) am dickeren Ende (15) des Spreizelements (6) angeordnet ist.

8. Wälzlager-Montagewerkzeug nach Anspruch 6 oder 7, **dadurch gekennzeichnet, dass** das Spreizelement (6) in einem am Handgriff (12) angrenzenden Endbereich einen verbreiteten Abschnitt (16) aufweist.

9. Wälzlager-Montagewerkzeug nach einem der Ansprüche 6 bis 8, **dadurch gekennzeichnet, dass** das Spreizelement (6) mit dem Handgriff (12) über ein Gelenk (17) verbunden ist.

10. Wälzlager-Montagewerkzeug nach einem der Ansprüche 6 bis 9 **dadurch gekennzeichnet, dass** das Spreizelement (6) in Richtung seiner Längsachse (L) gewellt ausgebildet ist oder dass das Spreizelement (6) bogenförmig ausgebildet ist, wobei der Bogen sich um die Richtung der Längsachse (L) des Spreizelements (6) spannt oder dass das Spreizelement (6) auf seiner Oberfläche mit Erhebungen (18) versehen ist, die aus elastischem Material bestehen.
